# DEMANDE DE BREVET EUROPEEN

(11) **EP 0 557 155 A1**
(43) Date de publication de la demande: **25.08.1993**
(21) Numéro de dépôt: 93400311.2
(22) Date de dépôt: 08.02.1993
(51) Int. Cl.: B01D 53/36, B01J 20/18, B01J 29/06

(54) **Procédé de traitement d'air de ventilation contenant du styrène**

(30) Priorité: 18.02.1992 FR 9201907
(71) Demandeur: INSTITUT FRANCAIS DU PETROLE, F-92502 Rueil-Malmaison (FR)
(72) Inventeur: Morlec, Jean, F-44600 Saint Nazaire (FR); Travers, Christine, F-92500 Rueil Malmaison (FR); Dezael, Claude, F-78600 Maisons Laffitte (FR)

(57) **Abrégé**

L'invention concerne un procédé de traitement d'air de ventilation contenant du styrène le procédé comprenant :
1. Une étape d'adsorption sur une zéolithe hydrophobe contenant par exemple du platine et/ou du palladium.
2. Une étape de combustion-désorption dans laquelle des gaz chauds passent au travers de la zéolithe imprégnée de styrène, afin de désorber le styrène et de le brûler sur ladite zéolithe.

## Description

La présente invention concerne un procédé de traitement d'air de ventilation contenant du styrène.

Une attention de plus en plus grande est apportée par les organismes de contrôle (C.R.A.M., I.N.R.S....) à la salubrité de l'air dans les locaux de travail. Une attention particulière est apportée aux ateliers de mise en oeuvre des polyesters stratifiés dont l'air est rapidement chargé de teneur importante de styrène, qui sans ventilation peut atteindre plusieurs centaines de ppm. Les solutions actuellement adoptées sont celle d'une ventilation très importante par soufflage-aspiration d'air de balayage. C'est ainsi que pour un atelier d'une cinquantaine d'ouvriers, d'un volume global de l'ordre de 26 000 m³, on est amené à installer un système de ventilation véhiculant de l'ordre de 100 000 m³/h d'air. Dans ces conditions on arrive à maintenir la teneur en hydrocarbure dans l'air de l'atelier en dessous de 50 ppm correspondant à 215 mG de styrène par m³ d'air.

Ces conditions de travail sont assurées avec une installation de ventilation fonctionnant sans recyclage, ce qui signifie, en période hivernale, la nécéssité de chauffer jusqu'à environ 20°C l'air frais introduit. De plus l'air aspiré dans les ateliers est rejeté à l'extérieur avec 10 à 20 kg de styrène par jour, ce qui, pour un environnement urbain comme c'est le cas pour certaines usines, n'est pas sans poser de question.

Le but du procédé selon l'invention est donc déliminer le styrène responsable de l'insalubrité des locaux de travail et de la pollution atmosphérique. Par voie de conséquence, les dépenses de chauffage pouvant être minimisées, la pollution NOx et COx s'en trouverait réduite également.

L'une des techniques les plus utilisées dans l'art antérieur est d'adsorber les composés malodorants et/ou toxiques sur du charbon actif. Néanmoins, le charbon actif a une régénérabilité difficile du fait qu'il est combustible et qu'il ne supporte pas les hautes températures, d'autant que le styrène polymérise partiellement sur la masse de captation. Le procédé selon l'invention est un procédé comprenant les étapes successives suivantes :
1. Une étape d'adsorption : dans cette étape, on fait passer dans une enceinte lesdits gaz au travers d'au moins une masse de captation sélective du styrène, formée par au moins une zéolithe hydrophobe, afin que ladite substance contenue dans lesdits gaz soit adsorbée par cette zéolithe; de plus, cette zéolithe contient du platine et/ou du palladium ou se trouve mélangée avec un catalyseur capable d'initier une combustion catalytique : ainsi la phase de combustion de l'étape suivante 2) est effectuée à l'intérieur de la même enceinte sur zéolithe.
2. Une étape de combustion-désorption dans cette étape, on fait passer des gaz chauds au travers de ladite zéolithe qui contient le styrène adsorbé, afin de désorber ladite substance, et de la brûler sur la zéolithe.

La zéolithe utilisée a été rendue hydrophobe avantageusement par un traitement de désalumination d'une zéolithe naturelle ou de synthèse, de préférence d'une zéolithe naturelle ; tout traitement de désalumination connu de l'homme du métier peut-être utilisé par exemple un traitement d'acide direct. Cette zéolithe hydrophobe possède de préférence un rapport atomique d'au moins 25, généralement d'au moins 30 et par exemple compris entre 30 et 40. Elle est habituellement choisie dans le groupe formé par la mordénite et la clinoptilolite.

Les gaz chauds utilisés dans l'étape 2) sont introduits dans la zéolithe, en général à une température comprise entre 200 et 350°C. Ce sont généralement des gaz de combustion inertes (par exemple un mélange d'oxydes de carbon, d'oxydes d'azote et d'eau notamment), provenant d'une chaudière et dans laquelle une quantité croissante d'oxygène est ajoutée. Après un certain temps, ces gaz chauds peuvent être constitués d'air chaud. L'étape 2) permet notamment de régénérer la zéolithe utilisée et arrivée à saturation.

L'effluent issu de l'étape 2) peut éventuellement être ensuite soumis à une étape de combustion ultime, généralement à une température supérieure à 800°C, par exemple dans une chaudière qui peut-être celle servant à chauffer les gaz utilisés dans l'étape 2) de combustion-désorption.

L'effluent issu de l'étape 2) ou issu de l'étape de combustion ultime (lorsque celle-ci est présente dans le procédé selon l'invention), peut-être avantageusement soumis à une étape d'élimination des oxydes de soufre contenus dans ledit effluent. Cette étape est avantageuse lorsque les gaz malodorants et/ou toxiques à traiter contiennent des composés soufrés, par exemple des mercaptans. Elle permet d'abaisser la teneur en oxydes de soufre à une valeur habituellement inférieure à 150 ppm. Elle peut-être effectuée selon toute méthode d'élimination des oxydes de soufre connue de l'homme du métier, par exemple selon les méthodes décrites dans les brevets US-A-4 725 417, US-A-4 781 903 et US-A-4 855 117 au nom de la demanderesse.

L'effluent issu de l'étape 2) ou issu de l'étape de combustion ultime (lorsque celle-ci est présente dans le procédé selon l'invention) ou issu de l'étape d'élimination des oxydes de soufre (lorsque celle-ci est présente dans le procédé selon l'invention) peut-être avantageusement soumis à une étape d'élimination des oxydes d'azote contenus dans ledit embuent. Ces oxydes d'azote proviennent généralement des gaz chauds utilisés lors de l'étape 2) de combustion-désorption. Cette étape d'élimination des oxydes d'azote peut-être effectuée selon toutes méthode connue de l'homme du métier, par exemple par réduction catalytique sélective des oxydes d'azote par l'ammoniac, on peut en particulier, employer la méthode décrite dans la demande de brevet EP-A-0 325 511 au nom de la demanderesse.

Au moins deux lits de zéolithes peuvent-être éventuellement disposés alternativement sur le circuit de gaz malodorants et/ou toxiques à traiter. Ainsi, lorsque le premier lit de zéolithe est arrivé à saturation, le courant de gaz malodorants et/ou toxiques est envoyé vers un autre lit de zéolithe : le premier lit de zéolithe peut alors être régénéré sans que le procédé de traitement, soit interrompu.

Le procédé selon l'invention peut également être mis en oeuvre sur deux sites géographiques différents : lorsque la zéolithe utilisée, disposée sur un premier site, est arrivée à saturation après l'étape 1) d'adsorption, elle est remplacée sur ce même site par une autre zéolithe "neuve" et est envoyée vers un second site où s'effectue l'étape 2) de combustion-désorption et éventuellement les autres étapes décrites précédemment. Une fois régénérée, elle peut alors être renvoyée éventuellement sur le premier site afin de remplacer l'autre zéolithe arrivée à saturation. Ainsi, les installations employées dans le procédé selon l'invention ne sont pas nécessairement disposées sur le même site géographique.

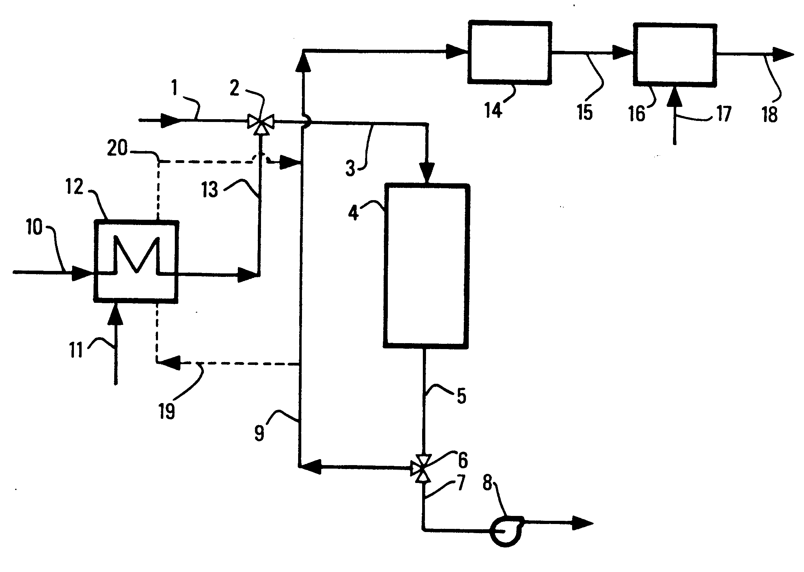

La figure unique illustre l'une des variantes possibles de l'invention.

L'air de ventilation contenant du styrène (1) passe dans une vanne 3 voies (2) puis dans une conduite (3) pour arriver dans un adsorbeur (4) chargé d'une zéolithe hydrophobe contenant à titre d'exemple du palladium qui va adsorber le styrène contenue dans l'air. Une pompe (8) assure la circulation de ces gaz au travers de l'adsorbeur (4), de la conduite (5), d'une vanne qui ici à titre d'exemple est du type vanne trois voies (6) et de la conduite (7).

Lorsque la zéolithe est arrivée à saturation, d'une part, la vanne trois voies (2) est fermée dans le sens conduite (1) -conduite (3) et ouverte dans le sens conduite (13) -conduite (3), d'autre part, la vanne trois voies (6) est fermée dans le sens conduite (5) -conduite (7) et ouverte dans les sens conduite (5) -conduite (9). Un courant de gaz (10) est alors chauffé au travers d'une chaudière (12) alimentée en gaz naturel (11), puis est amené par la conduite (13), la vanne trois voies (2) et la conduite (3) vers l'adsorbeur (4) : le styrène est alors brûlé à l'intérieur de l'adsorbeur (4) et désorbé. L'effluent sortant de l'adsorbeur (4) par la conduite (5) passe par la vanne trois voies (6) puis la conduite (9) pour arriver dans une section d'élimination des oxydes de soufre (14). L'effluent sortant de cette section (14) par la conduite (15) est dirigé vers une section de réduction catalytique sélective des oxydes d'azote (16) alimentée en ammoniac par la conduite (17). Les gaz sortant de la section (16) sont alors "propres", c'est-à-dire exempts de substances malodorantes et/ou toxiques.

Eventuellement, avant d'être introduit dans la section (14), l'effluent issu de l'adsorbeur (4) peut-être envoyé par la conduite (19) dans la chaudière (12) où il subit une combustion ultime à environ 900°C. L'effluent sort ensuite de la chaudière par la conduite (20).

## Revendications

**1-** Procédé de traitement d'air de ventilation contenant du styrène et comprenant les étapes successives suivantes :
1. Une étape d'adsorption, dans au moins une enceinte dans laquelle lesdits gaz passent au travers d'au moins une masse de captation sélective du styrène formée par au moins une zéolithe hydrophobe, ladite zéolithe contenant du platine et/ou du palladium ou étant mélangée avec un catalyseur capable d'initier une combustion catalytique,
2. Une étape de combustion-désorption, dans laquelle des gaz chauds passent au travers de ladite zéolithe contenant ladite subtance, afin de la désorber, et de brûler ladite substance sur ladite zéolithe.

**2-** Procédé selon la revendication 1 dans lequel ladite zéolithe hydrophobe est préparée par désalumination d'une zéolithe naturelle ou de synthèse.

**3-** Procédé selon la revendication 2 dans lequel ladite zéolithe hydrophobe est préparée par désalumination d'une zéolithe naturelle choisie dans le groupe formé par la mordénite et la clinoptilolite.

**4-** Procédé selon l'une des revendications 1 à 3 dans lequel ladite zéolithe hydrophobe possède un rapport atomique Si/Al d'au moins 25.

**5-** Procédé selon l'une des revendications 1 à 4 dans lequel, dans l'étape 2), les gaz chauds sont introduits dans ladite zéolithe à une température comprise entre 200 et 350°C.
